# EUROPÄISCHE PATENTSCHRIFT

(11) **EP 1 151 654 B1**
(45) Veröffentlichungstag und Bekanntmachung des Hinweises auf die Patenterteilung: **07.07.2004**
(21) Anmeldenummer: 01109095.8
(22) Anmeldetag: 12.04.2001
(51) Int. Cl.: A01D 43/08

(54) **Erntemaschine, insbesondere selbstfahrender Feldhäcksler**
Harvesting machine especially self-propelled forage harvester
Machine de récolte en particulier faucheuse-hacheuse automotrice

(30) Priorität: 04.05.2000 DE 10021657
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard, Dr. -Ing, 48480 Spelle (DE); Berth, Dieter, Dipl. -Ing., 01844 Neustadt (DE); Strobel, Thomas, Dipl. -Ing., 01833 Stolpen OT Lagenwolmsdorf (DE); Radke, Karl-Heinz, Dipl. -Ing., 02681 Wilthen (DE)
(74) Vertreter: Busse & Busse Patentanwälte

(56) Entgegenhaltungen:
- EP-A- 0 492 273
- DE-A- 3 330 195
- DE-A- 3 535 620
- DE-A- 19 638 033
- DE-A- 19 638 034
- FR-A- 2 539 950
- FR-A- 2 692 430

## Beschreibung

Die Erfindung betrifft eine Erntemaschine, insbesondere einen selbstfahrenden Feldhäcksler zum Aufnehmen und Häckseln von Mais, Anwelkgras, Grünfutter und dergleichen Erntegut nach dem Oberbegriff des Anspruchs 1. Derartige Erntemaschinen werden vielfach zum Ernten und gebrauchsfertigem Zerkleinern verschiedenartigen Ernteguts verwendet. So ist es beim Ernten von Mais nach dessen Zerhäckseln notwendig, die Körner aufzubrechen, da sie sonst als Tierfutter unverdaulich sind. Dies geschieht in einer der Häckseleinrichtung nachgeordneten Konditioniereinrichtung, einem sogenannten Cracker, bei dem das Erntegut zwischen Quetschwalzen hindurchgeführt und dabei aufgebrochen wird. Beim Ernten von reinem Grünfutter wie z. B. Gras ist hingegen das nachfolgende Durchlaufen einer Konditioniereinrichtung nach dem Zerhäckseln nicht notwendig und würde das sehr feuchte Erntegut durch die Quetschung sogar schädigen. Gattungsgemäße Erntemaschinen können daher sowohl mit als auch ohne Konditioniereinrichtung betrieben werden.

Die DE 195 38 199 C2 beschreibt eine Erntemaschine, die für den Ernteguttransport nach der Häckseleinrichtung zwei verschiedene Kanäle aufweist, von denen einer glatt und ohne weitere Bearbeitungseinrichtung ausgebildet ist, während der andere das Erntegut durch eine Konditioniereinrichtung hindurchleitet. Wahlweise kann durch Betätigung verschiedener Öffnungsklappen an der Häckseleinrichtung der Weg durch den glatten Kanal oder durch den Kanal mit Konditioniereinrichtung freigegeben werden. Die Umstellung der beiden Betriebsarten erfolgt bei dieser Maschine sehr schnell und einfach. Es ist jedoch von Nachteil, daß die Konditioniereinrichtung, auch wenn sie für den gerade ausgeführten Emtebetrieb nicht benötigt wird, in der Maschine verbleibt und somit die Maschine mit unnötigem Gewicht belastet. Außerdem kann der Zeitraum, in dem die Konditioniereinrichtung nicht benötigt wird, nicht dazu genutzt werden, an dieser etwa notwendige Wartungsarbeiten durchzuführen.

Die DE 196 38 033 C2 zeigt einen gattungsgemäßen Feldhäcksler mit Konditioniereinrichtung, die um ein lösbares Schwenklager in Fahrtrichtung nach vorne geschwenkt und nach vorangegangener Entfernung der Häckseleinrichtung von dort aus entnommen oder wieder eingebaut werden kann. Zwar wird bei dieser Ausgestaltung zum Umbau der Maschine von der Maisernte auf Grünfutterernte die Konditioniereinrichtung aus der Maschine entnommen, jedoch ist der Ausbau aufwendig, da zunächst das Häckselaggregat entfernt werden muß. Auch ist die lösbare Ausbildung des Schwenklagers aus Stabilitätsgründen konstruktiv nicht unproblematisch und wartungs- bzw. pflegeintensiv.

Die Erfindung befaßt sich daher mit dem Problem, eine gattungsgemäße Erntemaschine konstruktiv so zu verbessern, daß der Ein- und Ausbau der Konditioniereinrichtung vereinfacht wird.

Dieses Problem wird erfindungsgemäß durch eine Erntemaschine mit den Merkmalen des Anspruchs 1 gelöst. Dadurch, daß die Konditioniereinrichtung an ihrer einen Seite mit einem verschwenkbaren Kanalabschnitt und an ihrer anderen Seite mit dem starren Bereich des Förderkanals lösbar verbunden ist, dient der verschwenkbare Kanalabschnitt als Schwenkarm für die Konditioniereinrichtung, deren Verschwenkung nach dem Lösen der Verbindung mit dem starren Bereich des Förderkanals zusammen mit dem verschwenkbaren Kanalabschnitt erfolgt. Dadurch kann die Konditioniereinrichtung in eine gut zugängliche Ablage- und Austauschposition gebracht werden, in der nach Lösen auch ihrer Verbindung mit dem verschwenkbaren Kanalabschnitt ein Entnehmen der Konditioniereinrichtung erfolgen kann. Der als Schwenkarm fungierende verschwenkbare Kanalabschnitt ermöglicht dabei die Anordnung der Konditioniereinrichtung in einem Bereich der Maschine, wo eine Entnahme ohne vorheriges Entfernen weiterer Aggregate wie beispielsweise der Häckseleinrichtung möglich ist. Dadurch, daß sich die Schwenkachse nicht direkt an der Konditioniereinrichtung, sondern an dem verschwenkbaren Kanalabschnitt befindet, erübrigt sich eine lösbare Ausbildung des Schwenklagers mit dessen vorbeschriebenen Nachteilen.

Zwar können auch gehäuseseitig Leiteinrichtungen für den Transport des gehäckselten Erntegutes nach Entfernen der Konditioniereinrichtung vorgesehen sein, jedoch ist es am sichersten und einfachsten, die Konditioniereinrichtung wahlweise gegen einen glatten Kanalabschnitt ohne Bearbeitungselemente auszutauschen. Die Verbindungselemente zwischen der Konditioniereinrichtung und dem verschwenkbaren Kanalabschnitt einerseits und dem starren Bereich des Förderkanals andererseits sind daher vorzugsweise auch für die Aufnahme eines glatten Kanalabschnitts ausgelegt.

Weitere Vorteile und Einzelheiten der Erfindung ergeben sich aus den Unteransprüchen und der nachfolgenden Beschreibung einer in den Zeichnungen dargestellten bevorzugten Ausführungsform der Erfindung; es zeigen:
- Fig. 1: eine perspektivische Ansicht auf den Teil einer Emtemaschine mit Häckseleinrichtung, Förderkanal und Konditioniereinrichtung,
- Fig. 2: eine Seitenansicht aus Richtung II auf den Gegenstand in Fig. 1, teilweise im Schnitt,
- Fig. 3: den Gegenstand aus Fig. 2 mit zusammen mit dem verschwenkbaren Kanalabschnitt herabgeschwenkter Konditioniereinrichtung,
- Fig. 4: den Gegenstand aus Fig. 3 nach Austausch der Konditioniereinrichtung durch einen glatten Kanalabschnitt,
- Fig. 5: den Gegenstand aus Fig. 4 mit wiedereingeschwenkten Kanalabschnitten,
- Fig. 6: den Gegenstand aus Fig. 5 in einer perspektivischen Ansicht von schräg hinten und
- Fig. 7: eine Detailvergrößerung des Ausschnitts VII in Fig. 6.

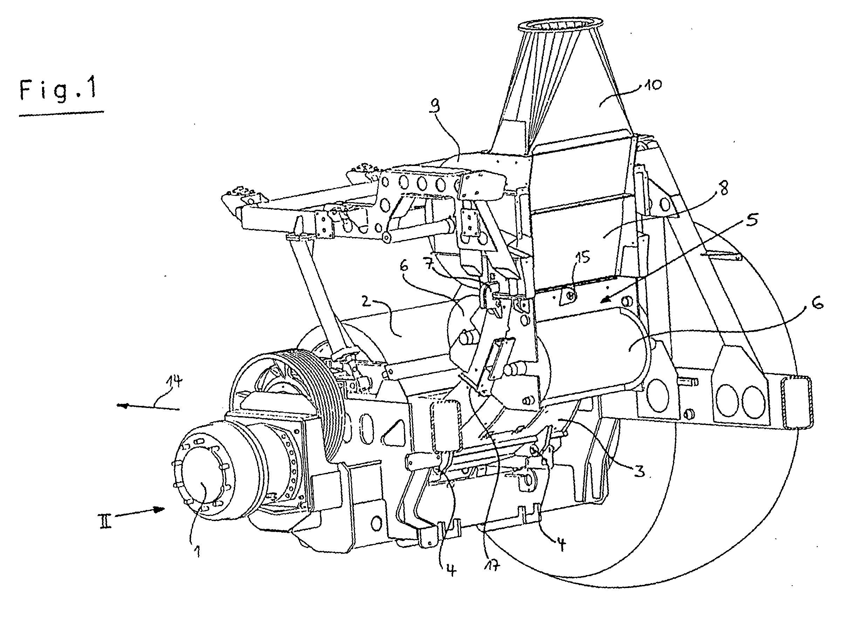

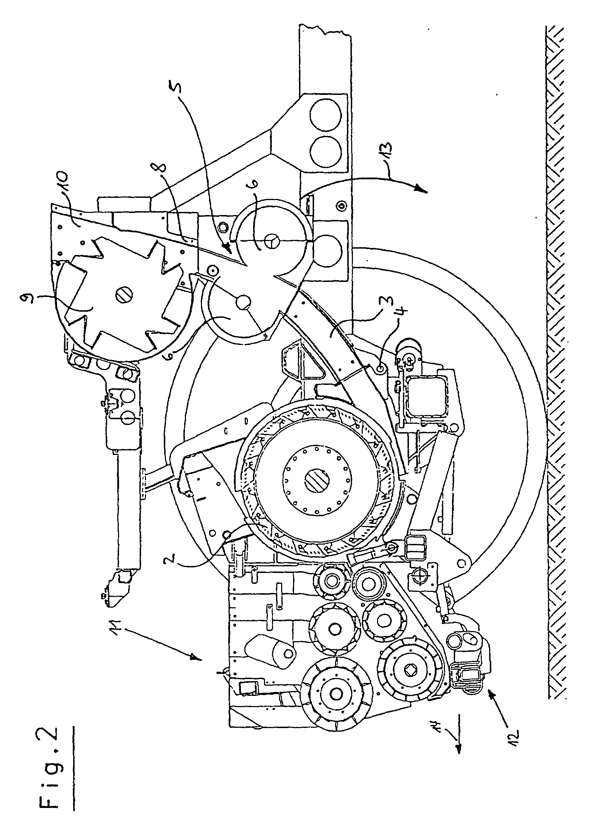

In der Ansicht gemäß Fig. 1 von seitlich hinten auf die erfindungsgemäß ausgestalteten Baugruppen der Erntemaschine ist eine im Bereich der Vorderachse 1 gelagerte Häckseltrommel 2 erkennbar, an die sich ein verschwenkbarer Kanalabschnitt 3 anschließt, dessen Verschwenkung über Schwenklager 4 um eine waagerechte Schwenkachse erfolgt. Mit dem verschenkbaren Kanalabschnitt 3 ist eine Konditioniereinrichtung 5 mit zwei Quetschwalzen 6 einseitig verbunden. An der anderen Seite der Konditioniereinrichtung 5 befinden sich Verbindungselemente 7, die an einen starren Kanalabschnitt 8 angrenzen, in den ein Nachbeschleuniger 9 eingreift, der das Emtegut durch einen Auswurfschacht 10 zu einem nicht dargestellten Auswurfkrümmer befördert. Die Figuren 2 bis 5 zeigen außerdem eine der Häckseltrommel 2 vorgeschaltete Zuführeinrichtung 11 sowie Kupplungselemente 12, die mit einem Vorsatzanbau wie z. B. einer Pick-up oder einem Maisgebiß verbindbar sind.

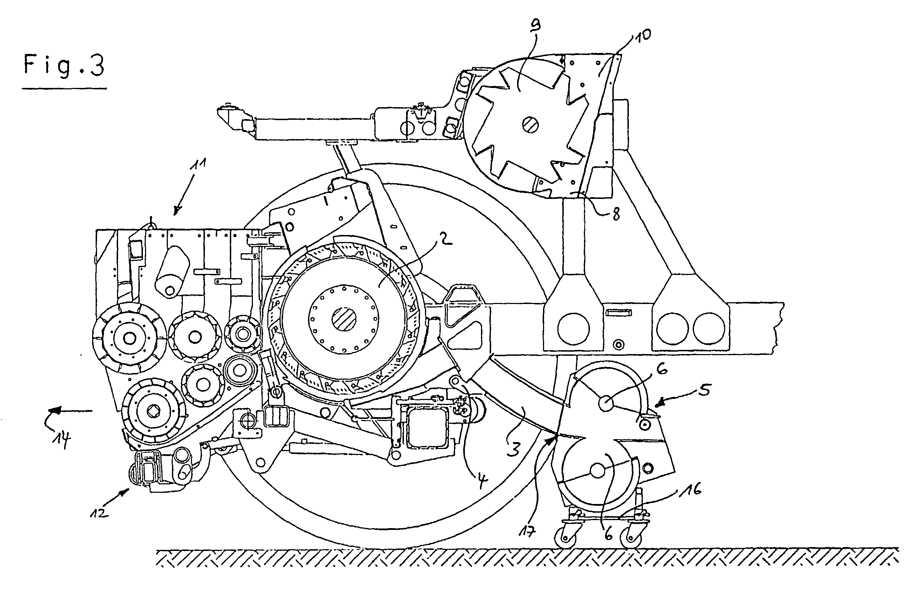

In den Figuren 1 und 2 ist der Betriebszustand zum Ernten und Verarbeiten von Mais mit eingebauter Konditioniereinrichtung 5 dargestellt. Zum Ausbau der Konditioniereinrichtung 5 werden die Verbindungselemente 7 zwischen der Konditioniereinrichtung 5 und dem starren Kanalabschnitt 8 gelöst, und der verschwenkbare Kanalabschnitt 3 wird zusammen mit der Konditioniereinrichtung 5 in die in Fig. 3 dargestellte Position verschwenkt. Dazu ist die Schwenkachse der Schwenklager 4 an der Unterseite des verschwenkbaren Kanalabschnitts 3 so angeordnet, daß die Verschwenkbewegung in Richtung des Pfeils 13 entgegen der Fahrtrichtung 14 der Erntemaschine und nach unten verläuft. Die Konditioniereinrichtung 5 läßt sich so in einen Bereich der Maschine absenken, der sich hinter den wesentlichen Einbauten, wie Häckseltrommel 2, Zuführeinrichtung 11 und der entsprechenden Getriebeelemente befindet und in dem daher ausreichend Raum zum Ausbau der Konditioniereinrichtung 5 zur Verfügung steht. Wenn sich der verschwenkbare Kanalabschnitt 3 wie bei der dargestellten Ausführungsform in unverschwenkter Position von der Schwenkachse aus schräg nach oben erstreckt, erfolgt die Verschwenkung nach Lösen der Verbindungselemente 7 automatisch durch das Eigengewicht der Konditioniereinrichtung. Damit diese nicht herunterfällt, weist sie nahe der Verbindung zu dem starren Bereich 8 des Förderkanals ein Griffelement in Form einer angeschweißten Öse 15 auf, die in eine Hebe- und Senkvorrichtung, z. B. eine Winde, eingehängt werden kann, die die Konditioniereinrichtung 5 dann entsprechend langsam herabläßt. Alternativ oder zusätzlich kann an dem verschwenkbaren Kanalabschnitt 3 auch eine hydraulische Verstelleinrichtung angreifen.

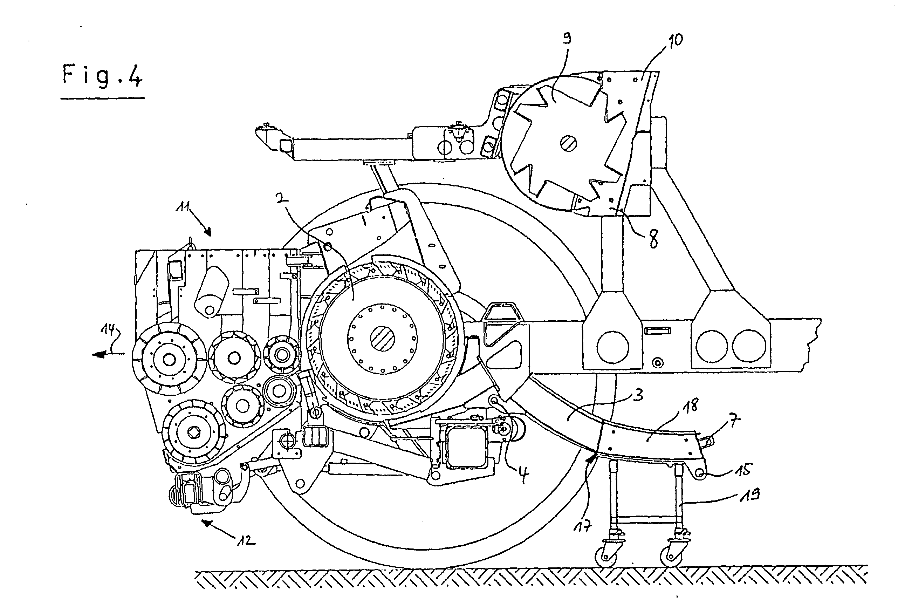

Fig. 3 zeigt eine Position, in der die Konditioniereinrichtung 5 auf ein rollbares Hilfsgestell 16 herabgelassen wurde, das die Konditioniereinrichtung 15 aufnimmt und zu deren Lagerung und Transport dient. In dieser Position kann die Verbindung 17 zwischen dem verschwenkbaren Kanalabschnitt 3 und der Konditioniereinrichtung 5 gelöst und die Konditioniereinrichtung 5 entfernt werden. Die Verbindung 17 wird vorzugsweise durch Verschraubungen an entsprechend vorgesehenen Flanschen gebildet, die eine konstruktiv einfache aber stabile Befestigungsmöglichkeit darstellen. Alternativ zu dem rollbaren Hilfsgestell 16 kann die Konditioniereinrichtung auch eine oder mehrere Aufnahmen zur Verbindung mit Rollelementen aufweisen, beispielsweise Stifte, auf die Rollen oder Rollbeine aufgesteckt werden können. Auch kann ein Rollelement fest an die Konditioniereinrichtung 5 angeformt sein und auch im Feldeinsatz an dieser verbleiben. Das gleiche gilt für den in den Figuren 4 bis 7 dargestellten glatten Kanalabschnitt 18, gegen den die Konditioniereinrichtung im Vergleich zu den Figuren 1 bis 3 ausgetauscht wurde.

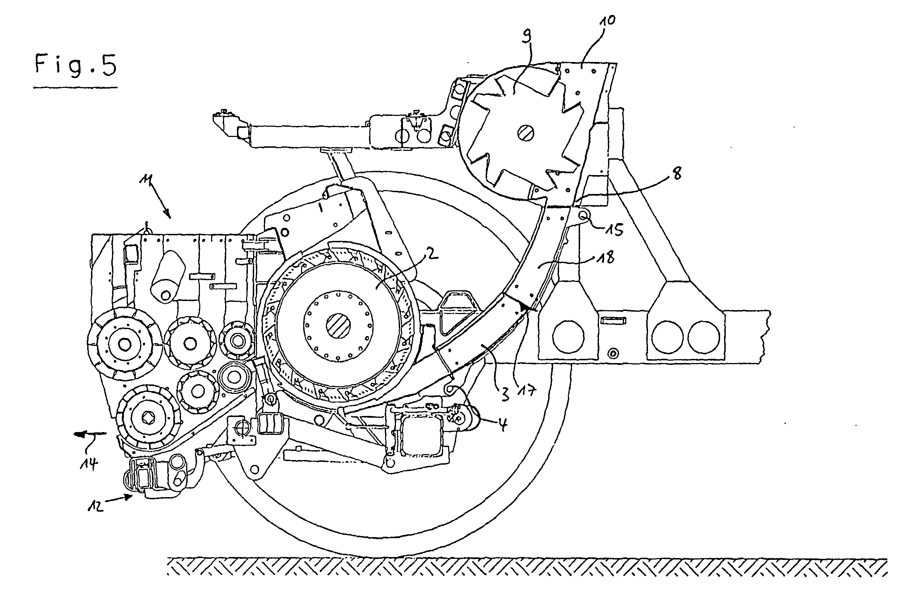

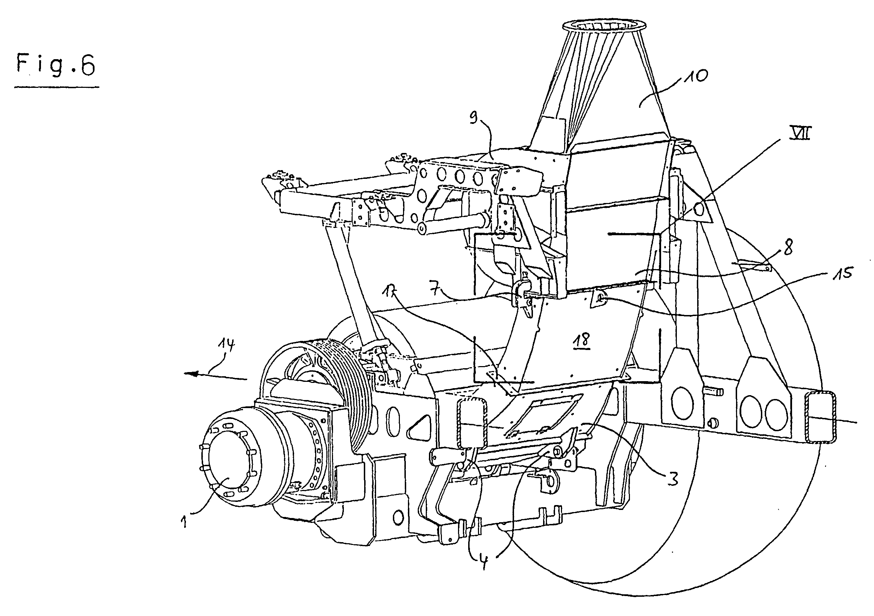

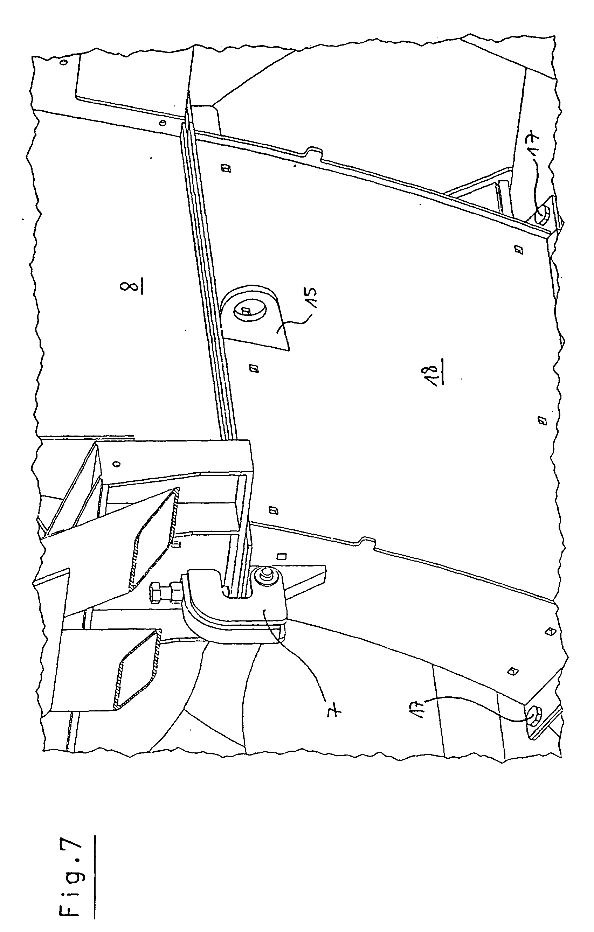

Fig. 4 zeigt den Anbau des glatten Kanalabschnittes 8, der sich auf einem entsprechend höheren rollbaren Hilfsgestell 19 befindet und mit diesem an den abgeschwenkten Kanalabschnitt 3 zum Anschrauben an diesen herangefahren wurde. Fig. 5 zeigt die wiedereingeschwenkte Betriebsposition zum Ernten und Verarbeiten von Grünfutter, wobei das Erntegut nach der Häckseltrommel den glatten Kanalabschnitt 18 ohne Konditioniereinrichtung durchläuft. Fig. 6 zeigt nochmals den Betriebszustand mit glattem Kanalabschnitt 18 in einer Ansicht entsprechend Fig. 1. In Fig. 7 ist in Detailvergrößerung eines der Verbindungselemente 7 dargestellt. Die Verbindungselemente 7 sind bevorzugt als Schnellverschlüsse in Form von Klemmen ausgebildet, die das Lösen des glatten Kanalabschnittes 18 bzw. der Konditioniereinrichtung 5 und eine schnelle Wiederbefestigung, ggf. sogar durch Ausbildung als Schnappverschluß, erleichtern und damit ebenfalls zur Bedienerfreundlichkeit der erfindungsgemäßen Erntemaschine beitragen.

## Patentansprüche

1. Erntemaschine, insbesondere selbstfahrender Feldhäcksler zum Aufnehmen und Häckseln von Mais, Anwelkgras, Grünfutter und dergleichen Erntegut, mit einer einer Zuführeinrichtung (11) und einer Häckseleinrichtung (2) nachgeordneten Konditioniereinrichtung (5) für das Erntegut, die wahlweise in einen Förderkanal eingreift oder aus diesem entfernbar ist, **dadurch gekennzeichnet, daß** die Konditioniereinrichtung (5) einerseits mit einem um eine im wesentlichen waagerechte Schwenkachse verschwenkbaren Kanalabschnitt (3) und andererseits mit einem starren Bereich (8) des Förderkanals starr aber lösbar verbunden ist.

2. Erntemaschine nach Anspruch 1, **dadurch gekennzeichnet, daß** die Verbindungen des Förderkanals mit der Konditioniereinrichtung Verbindungselemente (7,17) aufweisen, die zur wahlweisen Aufnahme eines glatten Kanalabschnitts (18) ohne Bearbeitungselemente für das Erntegut statt der Konditioniereinrichtung (5) geeignet ausgebildet sind.

3. Erntemaschine nach Anspruch 1 oder 2, **dadurch gekennzeichnet, daß** die Schwenkachse an der Unterseite des verschwenkbaren Kanalabschnitts (3) derart angeordnet ist, daß die Verschwenkbewegung des verschwenkbaren Kanalabschnitts (3) zum Entfernen der Konditioniereinrichtung (5) entgegen der Fahrtrichtung (14) der Erntemaschine nach unten gerichtet ist.

4. Erntemaschine nach einem der Ansprüche 1 bis 3, **dadurch gekennzeichnet, daß** die Verbindung zwischen der Konditioniereinrichtung (5) bzw. dem glatten Kanalabschnitt (18) und dem starren Bereich (8) des Förderkanals durch Schnellverschlüsse (7) gebildet ist.

5. Erntemaschine nach einem der Ansprüche 1 bis 4, **dadurch gekennzeichnet, daß** die Verbindung (17) zwischen der Konditioniereinrichtung (5) bzw. dem glatten Kanalabschnitt (18) und dem verschwenkbaren Kanalabschnitt (3) durch Verschraubungen gebildet ist.

6. Erntemaschine nach einem der Ansprüche 1 bis 5, **dadurch gekennzeichnet, daß** sich der verschwenkbare Kanalabschnitt (3) in unverschwenkter Position von der Schwenkachse aus schräg nach oben erstreckt.

7. Erntemaschine nach einem der Ansprüche 1 bis 3, **dadurch gekennzeichnet, daß** die Konditioniereinrichtung (5) und/oder der glatte Kanalabschnitt (18) nahe der Verbindung mit dem starren Bereich (8) des Förderkanals ein Griffelement (15) zum Einhängen in eine Hebe- und Senkvorrichtung aufweist.

8. Erntemaschine nach einem der Ansprüche 1 bis 7, **gekennzeichnet durch** ein rollbares Hilfsgestell (16,19) als Zubehör, das zur Aufnahme der Konditioniereinrichtung (5) und/oder des glatten Kanalabschnitts (18) ausgebildet ist.

9. Erntemaschine nach einem der Ansprüche 1 bis 7, **dadurch gekennzeichnet, daß** die Konditioniereinrichtung (5) und/oder der glatte Kanalabschnitt (18) zumindest eine Aufnahme zur Verbindung mit wenigstens einem Rollelement aufweist.

10. Erntemaschine nach einem der Ansprüche 1 bis 7, **dadurch gekennzeichnet, daß** an der Konditioniereinrichtung (5) und/oder an dem glatten Kanalabschnitt (18) ein Rollelement fest integriert ist.

## Claims

1. Harvesting machine, in particular a self-propelled forage harvester for receiving and chopping maize, pre-wilted grass, green fodder and similar harvested crop, with a conditioning device (5) connected in series to a feed device (11) and a chopping device for the harvested crop, which conditioning device either engages in a feed duct or can be removed from it, **characterised in that** the conditioning device (5) is connected on one side to a duct section (3) that can be swivelled about an essentially horizontal swivel axis, and is connected rigidly but detachably to a rigid area (8) of the feed duct.

2. Harvesting machine according to claim 1, **characterised in that** the connections of the feed duct to the conditioning device exhibit connecting elements (7, 17) which are suitably designed for the optional receiving of a smooth duct section (18) without processing elements for the harvested crop instead of the conditioning device (5).

3. Harvesting machine according to claim 1 or 2, **characterised in that** the swivel axis is arranged on the lower side of the swivelling duct section (3) so that the swivel movement of the swivelling duct section (3) is directed downwards against the direction of travel (14) of the harvesting machine for removing the conditioning device (5).

4. Harvesting machine according to one of claims 1 to 3, **characterised in that** the connection between the conditioning device (5) or the smooth duct section (18) and the rigid area (8) of the feed duct is formed by quick-release locks.

5. Harvesting machine according to one of claims 1 to 4, **characterised in that** the connection (17) between the conditioning device (5) or the smooth duct section (18) and the swivelling duct section (3) is formed by screw connections.

6. Harvesting machine according to one of claims 1 to 5, **characterised in that** the swivelling duct section (3) extends obliquely from the swivel axis in the unswivelled position.

7. Harvesting machine according to one of claims 1 to 3, **characterised in that** the conditioning device (5) and/or the smooth duct section (18) exhibits a grab element (15) for suspending in a raising and lowering device close to the connection to the rigid area (8) of the feed duct.

8. Harvesting machine according to one of claims 1 to 7, **characterised by** a rollable auxiliary frame (16, 19) as an accessory which is designed for receiving the conditioning device (5) and/or the smooth duct section (18).

9. Harvesting machine according to one of claims 1 to 7, **characterised in that** the conditioning device (5) and/or the smooth duct section (18) exhibits at least one receiving area for connection to at least one rolling element.

10. Harvesting machine according to one of claims 1 to 7, **characterised in that** a rolling element is solidly integrated on the conditioning device (5) and/or on the smooth duct section (18).

## Revendications

1. Machine de récolte, en particulier faucheuse-hacheuse autotractée pour la récolte et le hachage du maïs, de foin, de fourrage vert et de récoltes similaires, avec un dispositif de conditionnement (5) de la matière récoltée qui est disposé en aval d'un dispositif d'amenée (11) et d'un dispositif de hachage (2) et qui sélectivement s'engage dans un canal de transport ou peut s'en éloigner, **caractérisée en ce que** le dispositif de conditionnement (5) est relié de manière rigide mais libérable d'une part à une partie de canal (3) apte à pivoter autour d'un axe essentiellement horizontal et d'autre part à une zone rigide (8) du canal de transport.

2. Machine de récolte selon la revendication 1, **caractérisée en ce que** les liaisons entre le canal de transport et le dispositif de conditionnement présentent des éléments de liaison (7, 17) qui sont configurés de manière à permettre sélectivement la réception d'une partie lisse de canal (18) sans éléments de traitement de récoltes au lieu du dispositif de conditionnement (5).

3. Machine de récolte selon la revendication 1 ou 2, **caractérisée en ce que** l'axe de pivotement est disposé sur le côté inférieur de la partie de canal (3) apte à pivoter, de telle sorte que pour l'enlèvement du dispositif de conditionnement (5) dans le sens opposé au sens d'avancement (14) de la machine de récolte, le déplacement de pivotement de la partie de canal (3) apte à pivoter est dirigé vers le bas.

4. Machine de récolte selon l'une quelconque des revendications 1 à 3, **caractérisée en ce que** la liaison entre le dispositif de conditionnement (5) ou la partie lisse de canal (18) et la partie rigide (8) du canal de transport est formée par des fermetures rapides (7).

5. Machine de récolte selon l'une quelconque des revendications 1 à 4, **caractérisée en ce que** la liaison (17) entre le dispositif de conditionnement (5) ou la partie lisse de canal (18) et la partie de canal (3) apte à pivoter est formée par des liaisons filetées.

6. Machine de récolte selon l'une quelconque des revendications 1 à 5, **caractérisée en ce que** la partie de canal (3) apte à pivoter déborde obliquement vers le haut par rapport à l'axe de pivotement lorsqu'elle est en position non pivotée.

7. Machine de récolte selon l'une quelconque des revendications 1 à 3, **caractérisée en ce qu'**à proximité de la liaison avec la partie rigide (8) du canal de transport le dispositif de conditionnement (5) et/ou la partie lisse de canal (18) présentent un élément de saisie (15) qui permet de les suspendre dans un dispositif de levage et d'abaissement.

8. Machine de récolte selon l'une quelconque des revendications 1 à 7, **caractérisée par** un bâti auxiliaire roulant (16, 19) configuré comme accessoire pour la réception du dispositif de conditionnement (5) et/ou de la partie lisse de canal (18).

9. Machine de récolte selon l'une quelconque des revendications 1 à 7, **caractérisée en ce que** le dispositif de conditionnement (5) et/ou la partie lisse de canal (18) présentent au moins un logement de liaison à au moins un élément de roulement.

10. Machine de récolte selon l'une quelconque des revendications 1 à 7, **caractérisée en ce qu'**un élément de roulement est intégré fixement dans le dispositif de conditionnement (5) et/ou dans la partie lisse de canal (18).
